# EUROPEAN PATENT SPECIFICATION

(11) **EP 3 112 032 B1**
(45) Date of publication and mention of the grant of the patent: **27.05.2020**
(21) Application number: 14883775.0
(22) Date of filing: 25.02.2014
(51) Int. Cl.: B04B 1/08, B01D 45/12, B04B 11/02, F01M 13/04, B01D 45/14, B04B 5/12, B04B 5/00

(54) **OIL SEPARATOR**
ÖLABSCHEIDER
SÉPARATEUR D'HUILE

(43) Date of publication of application: 04.01.2017
(73) Proprietor: Tokyo Roki Co., Ltd., Yokohama-shi Kanagawa 224-0041 (JP)
(72) Inventor: ISHIDA, Kosaku, Yokohama-shi Kanagawa 224-0041 (JP); YAO, Tsuyoshi, Yokohama-shi Kanagawa 224-0041 (JP)
(74) Representative: Moreland, David
(86) International application number: PCT/JP2014/054426
(87) International publication number: WO 2015/128925

(56) References cited:
- EP-A1- 2 980 373
- WO-A1-99/51353
- DE-U1-202007 009 913
- JP-A- 2005 507 310
- JP-A- 2005 515 065
- JP-A- 2008 502 473
- JP-A- 2009 167 812
- JP-A- 2009 167 812
- JP-A- 2011 528 280

## Description

### Technical Field

The present invention relates to an oil separator that separates mist oil contained in target gas from the gas.

### Background Art

There has been known an oil separator that separates mist oil contained in target gas from the gas. For example, an oil separator described in Patent Literature 1 includes a cylindrical stationary housing, a cylindrical stationary casing with a ceiling, and a conical partition with an opening on the top surface. These components define a lower chamber and an upper chamber. The lower chamber includes a centrifugal rotor to clean oil. The upper chamber includes a gas cleaning device to clean gas. A lower end of the stationary housing is coupled to a base. The lower chamber is communicated with an internal space of the tubular base. This tubular base is communicated with a combustion engine. Accordingly, oil after the cleaning is returned to the combustion engine and gas from a crankcase is introduced to the tubular base.

The centrifugal rotor and the gas cleaning device are coupled with a tubular supporting member and are rotatable around a stationary shaft inserted through the supporting member. The centrifugal rotor internally includes a separation chamber. The oil is supplied to this separation chamber through a clearance between the supporting member and the stationary shaft and through an opening open at the supporting member. After the cleaning in the separation chamber, the supplied oil is discharged to a side portion through discharge ports disposed at a bottom surface of the centrifugal rotor. Discharging the oil generates a driving power to rotate the centrifugal rotor and the gas cleaning device.

The gas from the crankcase flows from below into a clearance between the stationary housing and the centrifugal rotor in the lower chamber, and then the gas moves up. Through an opening disposed on a top surface of the partition, the gas flows into the upper chamber. After the cleaning by the gas cleaning device, the gas is discharged through a discharge port that projects upward from the ceiling of the stationary casing. A further example of an oil separator is known from EP2980373 or DE202007009913U.

### Citation List

### Patent Literature

Patent Literature 1: Japanese Unexamined Patent Application Publication No. 2005-515065

### Disclosure Of The Invention

### Problems To Be Solved By The Invention

The above-described oil separator has a vertically elongated structure since the centrifugal rotor is disposed in the lower chamber and the oil discharge ports are disposed at the lower end of the centrifugal rotor. This ensures a sufficient height from the oil discharge ports to the opening on the partition even if the conventional oil separator is mounted to a vehicle such as a motor truck. Therefore, it is considered that a failure is less likely to occur even if the oil separator is inclined.

] In order to downsize the oil separator, eliminating the centrifugal rotor in the lower chamber is considered. Without the centrifugal rotor, sections communicating with the combustion engine are located immediately below the partition, the communicating sections serving as discharge paths for oil and as an introduction path for gas. The oil discharge ports are also located immediately below the partition. The inclination of the oil separator having this configuration waves the oil by the gas introduced from an engine. This possibly causes the oil to flow into the upper chamber exceeding the partition. Flowing the oil in the upper chamber reduces a rotation speed of the gas cleaning device disposed inside the upper chamber, possibly losing cleaning performance for gas.

The present invention has been made under these circumstances, and an object of the present invention is to restrain waving of oil caused by introduced gas and to maintain a high cleaning performance for gas even if the oil separator is inclined.

### Summary of Invention

To achieve the above-described object, the present invention provides an oil separator for separating mist oil contained in target gas according to the appended claims. The oil separator includes: a plurality of separation disks that are rotatable together with a spindle and that are laminated in an axial direction of the spindle; a nozzle that is projected from a part of a peripheral surface of the spindle, the part being located below with respect to the separation disks, and that injects oil from an injection hole to rotate the spindle around an axis; a lower case that includes a gas introducing portion and an oil discharge portion, the gas introducing portion being configured to introduce the target gas, the oil discharge portion being configured to discharge oil; an upper case that is mounted to the lower case from above, the upper case and the lower case separating a chamber, the chamber housing the spindle, the separation disks, and the nozzle; and a partition member that partitions the chamber into a lower chamber and an upper chamber, and that forms a communication port around the spindle at a height between the nozzle and the separation disks, the communication port guiding the target gas that is in the lower chamber to the upper chamber, wherein the gas introducing portion is composed of a tubular member, the tubular member including an introduction-inlet end portion and an introduction-outlet end portion, the introduction-inlet end portion being for the target gas and being located outside of the lower case, the introduction-outlet end portion being for the target gas and being located in a proximity of a lower side of the nozzle.

According to the present invention, the gas introducing portion disposed in the lower case is composed of the tubular member. The introduction-inlet end portion faces outside the lower case, and the introduction-outlet end portion faces the proximity of the lower side of the nozzle. Accordingly, the introduction of the target gas by the gas introducing portion can restrain waving of the oil which is flowing through the oil discharge portion. Consequently, even if the oil separator is inclined, it is possible to prevent oil from flowing into the upper chamber, and a high cleaning performance for gas can be maintained.

In the above-described oil separator, it is preferable that the spindle is rotatably supported by a spindle shaft, that the lower case includes a joint to which a lower end portion of the spindle shaft is fitted, and that the gas introducing portion has an introduction-outlet-side part extending along the joint. This configuration allows the target gas to be introduced to the upper chamber from an area closer to the rotational center with respect to the path of an injection hole.

In the above-described oil separator, it is preferable that the spindle shaft is composed of a cylindrical member that supplies oil, the oil serving as a power source for the spindle, and that the joint is composed of a tubular member that supplies the oil to the spindle shaft. In such a configuration, the introduction-outlet-side part can increase the rigidity of the joint, which defines the supply flow passage for oil.

In the above-described oil separator, it is preferable that the introduction-outlet end portion for the target gas is located within a height range extending downward from a height of the injection hole by a rotation diameter d of the injection hole and within a diameter range 1.5 times of the rotation diameter d. In such a configuration, since the introduction-outlet end portion is located within the predetermined range using the nozzle as a reference. Accordingly, even the inclined oil separator can reliably prevent the flow of oil into the upper chamber.

In the above-described oil separator, it is preferable that the partition member is a ring-shaped plate which inclines downward toward an outer peripheral side, and that the oil which has been injected from the injection hole is sprayed to a downward inclined surface of the partition member. In this configuration, the injected oil flows downward, and this can restrain a mixture of the oil to the processed gas.

In the above-described oil separator, if the gas introducing portion has an introduction-inlet-side part which is disposed parallel to the oil discharge portion, it is possible to downsize the device.

In the above-described oil separator, if the introduction-inlet-side part of the gas introducing portion projects outwardly beyond the lower case at a position different from the oil discharge portion in the lower case, the degree of freedom of the introduction path for the target gas is improved.

### Advantageous Effects of Invention

According to the present invention, in an oil separator that separates mist oil contained in target gas from the gas, it is possible to restrain waving of oil caused by introduced gas and maintain a high cleaning performance for gas even if the oil separator is inclined.

### Brief Description of Drawings

Fig. 1 is a schematic diagram illustrating a closed crankcase ventilation system.
Fig. 2 is a front perspective view of an oil separator as viewed from obliquely above.
Fig. 3 is a back perspective view of the oil separator as viewed from obliquely below.
Fig. 4 is an exploded perspective view of the oil separator.
Fig. 5 is a cross-sectional view of an upper half portion of the oil separator.
Fig. 6 is a front perspective view of a lower case as viewed from obliquely above.
Fig. 7 is a back perspective view of the lower case as viewed from obliquely above.
Fig. 8 is a diagram illustrating a flange, a communication tube portion (an oil discharge portion), and a tubular member (a gas introducing portion) disposed in the lower case.
Fig. 9 is a cross-sectional view of the lower case.
Fig. 10 is a diagram illustrating flows of blow-by gas and oil.
Fig. 11 is a diagram illustrating flows of the blow-by gas and the oil in the oil separator inclined forward.
Fig. 12 is a cross-sectional view of main parts to describe a first modification where a stationary frame is omitted.
Fig. 13 is a diagram illustrating a second modification where an introduction-inlet-side part of the tubular member is projected forward from a front surface of the lower case, and is a front perspective view of the lower case as viewed from obliquely below.
Fig. 14 is a diagram illustrating the second modification, and is a front perspective view of the lower case as viewed from obliquely above.
Fig. 15 is a cross-sectional view of main parts to describe the second modification.

### Detailed Description

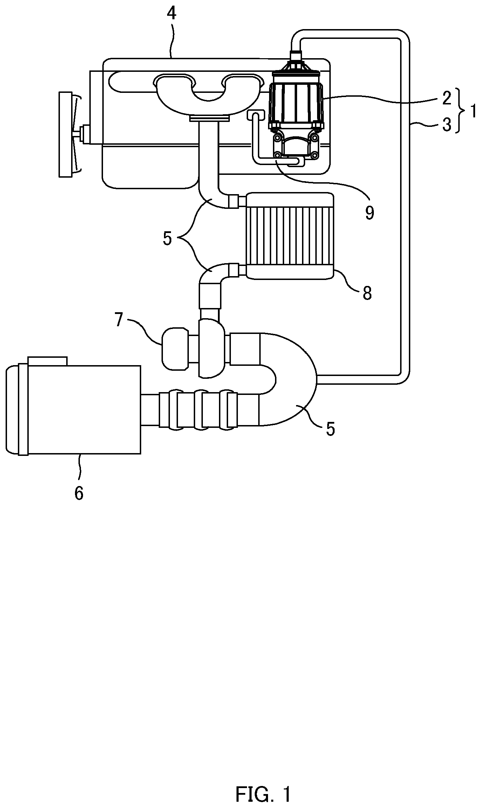

The following describes embodiments of the present invention with reference to the drawings. The following describes with an example of a closed crankcase ventilation system 1 (hereinafter referred to as a ventilation system 1) illustrated in Fig. 1.

As illustrated in Fig. 1, the ventilation system 1 includes an oil separator 2 and a breather pipe 3. The oil separator 2 processes blow-by gas (equivalent to target gas containing mist oil) discharged from an engine to separate the mist oil. This embodiment includes the oil separator 2 at a side surface of an engine 4. The breather pipe 3 constitutes a return flow passage, through which the processed blow-by gas discharged from the oil separator 2 returns to an intake-side flow passage 5 of the engine 4.

] In this ventilation system 1, the blow-by gas discharged from the engine 4 is introduced to the oil separator 2 disposed at the side surface of the engine 4. The oil separated by the oil separator 2 is returned to the engine 4. On the other hand, the processed blow-by gas is discharged from an upper end portion of the oil separator 2 and then is returned to the intake-side flow passage 5 through the breather pipe 3. Specifically, the processed blow-by gas is returned to a part at which an air filter 6 is coupled to a turbocharger 7 in the intake-side flow passage 5. The returned blow-by gas is mixed with fresh air from the air filter 6 and is compressed by the turbocharger 7. Afterwards, the blow-by gas is cooled by a charge cooler 8 and is supplied to the engine 4.

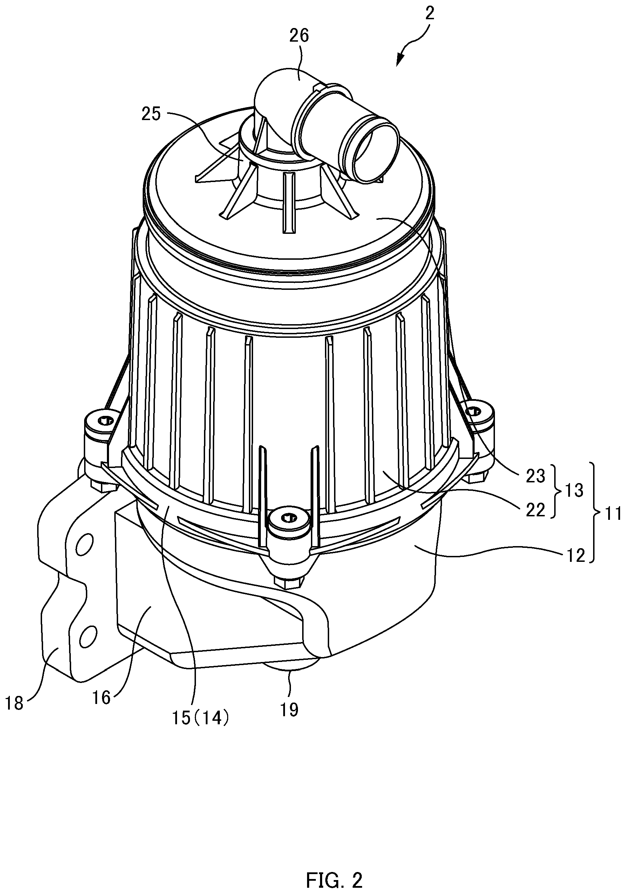

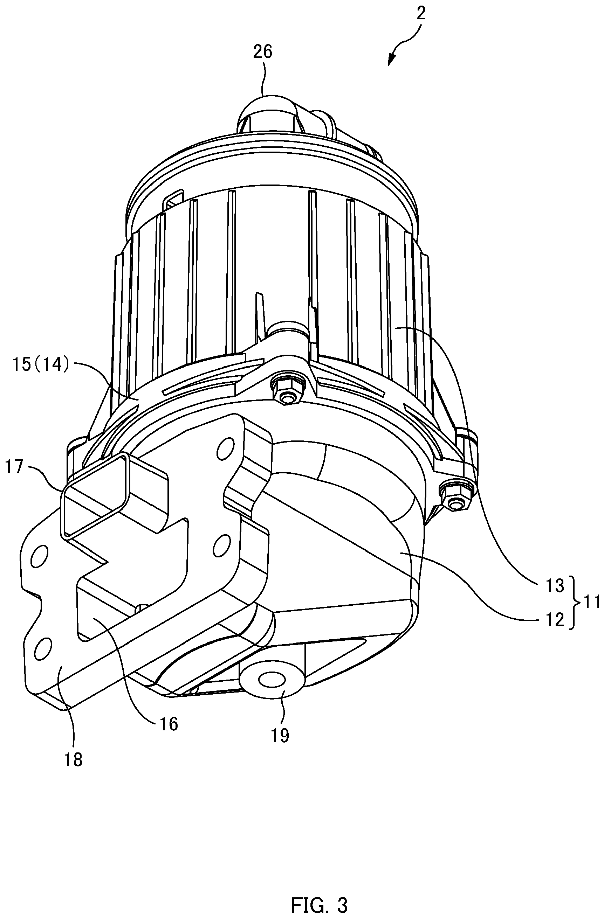

The following describes the oil separator 2. As illustrated in Figs. 2 and 3, this oil separator 2 includes a housing 11, which includes a lower case 12 and an upper case 13. The housing 11 houses various components such as a rotor unit and a PCV valve in an internal space (a chamber) (described later).

The lower case 12 is a part that constitutes and separates a lower side part of the housing 11. The lower case 12 is constituted of a box-shaped member having a bottom and an opened top surface. In this embodiment, the lower case 12, the communication tube portion, and the like are manufactured by casting; however, the lower case 12, the communication tube portion, and the like may be manufactured by molding a resin.

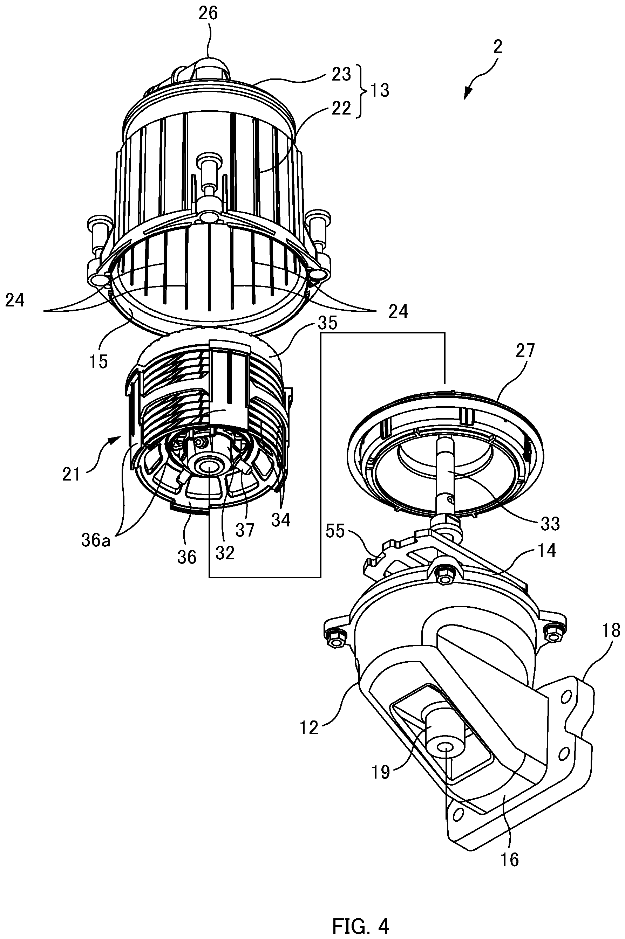

As illustrated in Fig. 4, a circular fitted portion 14 is disposed on an upper end portion of the lower case 12, and is fitted to a lower end portion 15 of the upper case 13. The lower case 12 includes a communication tube portion 16 facing backward on the back surface, and the communication tube portion 16 communicates with the engine 4. At the proximity of this communication tube portion 16, a tubular member 17 (see Fig. 3, to be described later) is disposed. This tubular member 17 functions as a gas introducing portion to which the blow-by gas is introduced. On the other hand, the communication tube portion 16 functions as an oil discharge portion from which oil after separation is discharged. The communication tube portion 16 includes a flange 18 at its distal end portion, and the flange 18 is joined to the side surface of the engine 4.

On a bottom surface of the lower case 12, a lower end portion of a joint 19 projects downward. This joint 19 has a cylindrical shape and is coupled to one end of an oil supply pipe 9, which is illustrated in Fig. 1. As will be described later, a part of the joint 19 projects upward inside the lower case 12. The other end of the oil supply pipe 9 is coupled to the side surface of the engine 4. The oil is supplied to the oil supply pipe 9 from an oil passage (not illustrated) disposed inside the engine 4. This oil is used as a power to rotate a rotor unit 21 illustrated in Fig. 4.

As illustrated in Figs. 2 to 4, the upper case 13 is a member mounted to the lower case 12 from above. The upper case 13 and the lower case 12 separate a chamber that houses components such as the rotor unit 21. This upper case 13 includes a cylindrical body cover 22 and a disk-shaped top surface cover 23. A plurality of longitudinal ribs 24 are formed at regular intervals in a circumferential direction on an inner surface of the body cover 22. These longitudinal ribs 24 capture the separated oil which is flowing circumferentially along the inner surface of the body cover 22, and the oil coalesces and flows down.

As illustrated in Fig. 2, the top surface cover 23 is mounted in an airtight manner to the upper end portion of the body cover 22. A tubular gas discharge portion 25 is oriented upward at a center of the top surface cover 23. This gas discharge portion 25 is a part from which the processed blow-by gas is discharged. The breather pipe 3 is coupled to the gas discharge portion 25 via an outlet pipe 26.

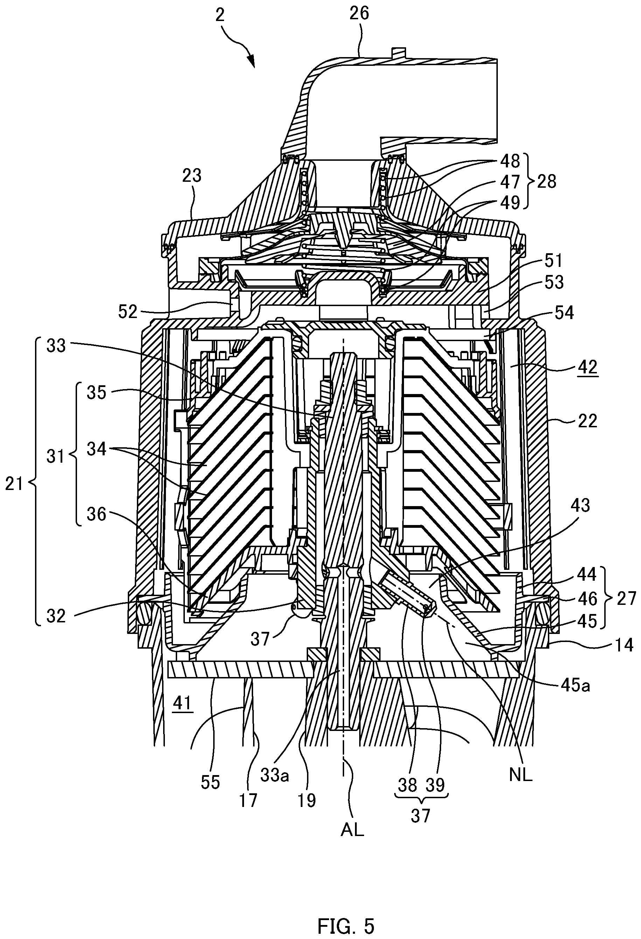

The following describes an internal structure of the oil separator 2. As illustrated in Fig. 4, the oil separator 2 internally includes the rotor unit 21 and a partition member 27. As illustrated in the cross-sectional view in Fig. 5, a PCV valve 28 is mounted to the inside of the top surface cover 23.

First, the following describes the rotor unit 21. This rotor unit 21 is a mechanism to separate the mist oil contained in the blow-by gas. As illustrated in Fig. 5, the rotor unit 21 includes a rotor 31, a spindle 32, and a spindle shaft 33.

The rotor 31 is a part that condenses the mist oil through rotation and separates the mist oil from the blow-by gas. The rotor 31 includes a plurality of separation disks 34, an upper holder 35, and a lower holder 36. The separation disks 34 are ring-shaped plates that incline downward toward the outer peripheral side, in other words, plates having a side surface of a truncated cone shape. The separation disk 34 of this embodiment has a thickness of 1 mm or less, and is manufactured by molding resin. These separation disks 34 are laminated in an axial direction of the spindle 32. For convenience of explanation, the separation disks 34 are illustrated providing intervals from one another; however, the actual intervals are defined to be extremely narrow (for example, less than 1 mm) .

The upper holder 35 is a member that holds the plurality of laminated separation disks 34 from above. Similarly, the lower holder 36 is a member that holds the separation disks 34 from below. In the outer peripheral edge of the lower holder 36, a plurality of coupling arms 36a for coupling to the upper holder 35 are disposed (see Fig. 4). In this embodiment, the four coupling arms 36a are provided circumferentially at intervals of 90 degrees. The upper ends of the coupling arms 36a are joined to the upper holder 35 so that the plurality of separation disks 34, the upper holder 35, and the lower holder 36 are integrated to constitute the rotor 31.

This rotor 31 has a cylindrical appearance. On the inner peripheral side of the rotor 31, there is a hollow part as illustrated in Fig. 5, and the hollow part vertically extends through. The spindle 32 is inserted into this hollow part and the spindle 32 and the rotor 31 are joined to one another. Accordingly, the rotor 31 rotates, together with the spindle 32, around the axis of the spindle 32.

Nozzles 37 project from a part of a peripheral surface of the spindle 32 located below the rotor 31. Each of the nozzles 37 is a part from which the oil supplied through the spindle shaft 33 is injected to generate a driving power to rotate the spindle 32 and the rotor 31.

The nozzles 37 of this embodiment include cylindrical nozzle bodies 38 and injection holes 39 disposed at distal end portions of the nozzle bodies 38. Base ends of the nozzle bodies 38 are coupled to the spindle 32, and the distal ends of the nozzle bodies 38 are closed.. The nozzle bodies 38 are mounted at an angle of 45 degrees obliquely downward with respect to the axial direction of the spindle 32 indicated by reference symbol AL. The three nozzle bodies 38 are circumferentially disposed at intervals of 120 degrees. The injection hole 39 is disposed on a side surface at the distal end portion of the nozzle body 38. More specifically, the injection hole 39 is disposed in a direction perpendicular to the axial direction of the nozzle body 38 indicated by reference symbol NL so that oil is injected horizontally.

The spindle shaft 33 is a pillar member serving as a bearing of the spindle 32, and supports the spindle 32 in a rotatable manner. As illustrated in Fig. 5, the spindle shaft 33 internally includes an oil supply passage 33a to supply the oil. A lower end portion of the spindle shaft 33 is coupled to an upper end portion of the joint 19 disposed in the lower case 12. As described above, the oil supply pipe 9 is coupled to the joint 19. Accordingly, the oil supplied through the oil supply pipe 9 passes through the joint 19, and then flows into the spindle shaft 33. Thereafter, the oil flows into the nozzle bodies 38, and then is injected from the injection holes 39.

As described above, the injection hole 39 is disposed at the distal end portion of the nozzle body 38 in a direction in which oil is injected horizontally. At the three nozzles 37e disposed at intervals of 120 degrees, formation positions for the injection holes 39 are matched. Accordingly, when the oil is injected from the respective injection holes 39, the rotor 31 and the spindle 32 rotate about the spindle shaft 33 as the axis.

The following describes the partition member 27. As illustrated in Fig. 5, the partition member 27 is a member that partitions the internal space (the chamber) of the housing 11 into a lower chamber 41 (a primary separation chamber) and an upper chamber 42 (a secondary separation chamber). And the partition member 27 forms a communication port 43. The blow-by gas in the lower chamber 41 is guided by the communication port 43 to the upper chamber 42. As illustrated in Figs. 4 and 5, the partition member 27 has an outer peripheral portion 44 and a tapered portion 45. The outer peripheral portion 44 is a short cylindrical part and has a collar portion 46 projecting outwardly at the middle in the height direction. The tapered portion 45 is disposed on the inner peripheral side with respect to the outer peripheral portion 44, and has a tapered shape in which the diameter is gradually reduced from the lower end of the outer peripheral portion 44 toward the top. The tapered portion 45 of this embodiment has an inclined surface 45a that inclines at an angle of approximately 45 degrees with respect to the axis of the spindle 32. An upper end opening of the tapered portion 45 forms the communication port 43.

The partition member 27 is fitted to the inner peripheral side of the fitted portion 14 in the lower case 12. The collar portion 46 abuts on an upper end of the fitted portion 14 from above to be positioned. Consequently, the tapered portion 45 is disposed immediately below the lower holder 36 included in the rotor 31. The chamber is partitioned into the lower chamber 41 and the upper chamber 42, which are bordered by the partition member 27. These lower chamber 41 and upper chamber 42 are communicated through the communication port 43. That is, this partition member 27 forms the communication port 43 around the spindle 32 at a height between the nozzles 37 and the separation disks 34, and the communication port 43 guides the blow-by gas in the lower chamber 41 to the upper chamber 42.

When the rotor 31 rotates at a high speed, oil film, which is turning at high speed, is formed on the outer peripheral side with respect to the turning paths of the injection holes 39. When the blow-by gas contacts this oil film, the mist oil contained in the blow-by gas is taken in the oil film and is centrifuged. This makes it possible to reduce the mist oil content in the blow-by gas. Thus, in the lower chamber 41, the mist oil content in the blow-by gas can be reduced by the injection of the oil, which functions as the driving source for the spindle 32 and the rotor 31. Therefore, the lower chamber 41 functions as the primary separation chamber for the mist oil.

The following describes the PCV valve 28. As illustrated in Fig. 5, the PCV valve 28 includes a diaphragm 47, upper springs 48, and lower springs 49.

The diaphragm 47 is a valve element and is manufactured by molding rubber and resin. The diaphragm 47 is composed of a disk-shaped member slightly inclining downward from the center to the peripheral edge portion. The upper springs 48 and the lower springs 49 are members to support the diaphragm 47 in such a manner that the diaphragm 47 can move vertically. That is, the upper springs 48 are disposed at the center of the diaphragm 47 from above, and the lower springs 49 are disposed at the center of the diaphragm 47 from below. The diaphragm 47 is supported in a vertically movable manner by being sandwiched between these upper springs 48 and lower springs 49.

This PCV valve 28 is disposed at the upper portion of the upper case 13. More specifically, the PCV valve 28 is placed on a pedestal portion 51 at a position immediately below the top surface cover 23. The diaphragm 47 covers this pedestal portion 51 in an airtight manner. The lower springs 49 are mounted between the pedestal portion 51 and the diaphragm 47. A space defined by the pedestal portion 51 and the diaphragm 47 is open to open air through an air communicating portion 52. On the other hand, the upper springs 48 are mounted between the top surface cover 23 and the diaphragm 47.

The diaphragm 47 vertically moves according to intake-side pressure of the engine 4 and internal pressure of the crankcase, to adjust the flow of the blow-by gas. That is, under an excessively large intake pressure (negative pressure) of the engine 4, the diaphragm 47 moves toward the gas discharge portion 25 (upward), and under a high pressure of the side close to the crankcase, the diaphragm 47 moves toward the opposite side (downward).

Accordingly, when the pressure in the upper chamber 42 becomes higher than a PCV-set pressure, the diaphragm 47 moves downward to increase a flow rate of the blow-by gas. On the contrary, when the pressure in the upper chamber 42 is lower than the PCV-set pressure, the diaphragm 47 moves upward to reduce the flow rate of the blow-by gas. Thus, the flow rate of the blow-by gas is appropriately adjusted, and thereby the crankcase-side pressure of the engine 4 maintains within a constant range.

An outer periphery of the pedestal portion 51 on which the PCV valve 28 is placed is defined by a sidewall portion, the sidewall portion having a circular shape as viewed from above. A communicating window 53 is disposed at this sidewall portion. Through this communicating window 53, an upper part of the upper chamber 42 with respect to the diaphragm 47 and a part of the upper chamber 42 on the rotor 31 side communicate. A cylindrical rib 54 is disposed at the lower side of the sidewall portion. This cylindrical rib 54 is a ring-shaped projection disposed at a position higher than the rotor unit 21 and lower than the diaphragm 47, and the cylindrical rib 54 is integrated with the body cover 22.

In the upper end part of the body cover 22, the cylindrical rib 54 guides downwards fluid (oil and blow-by gas) which is flowing along the inner surface of the body cover 22 from the outer peripheral side to the inner peripheral side. Since this cylindrical rib 54 can also reduce the amount of oil, it is possible to surely restrain an attachment of the oil to the PCV valve 28.

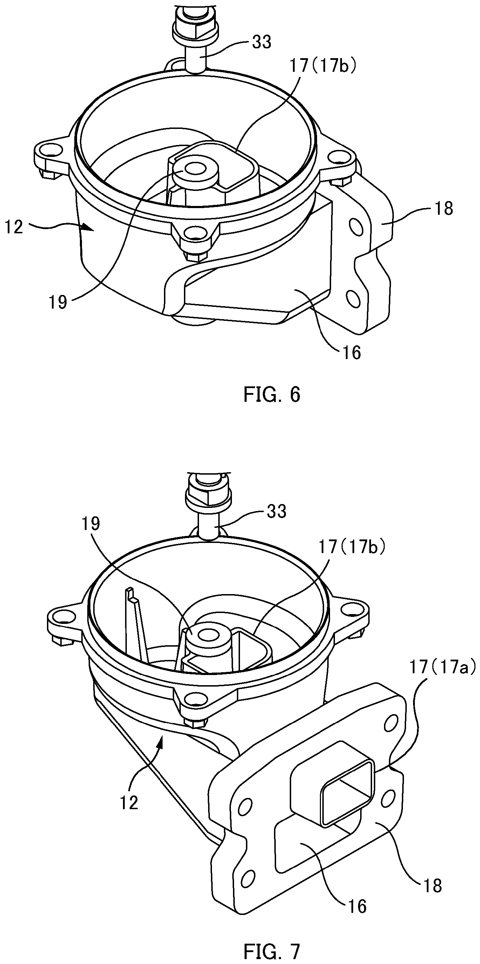

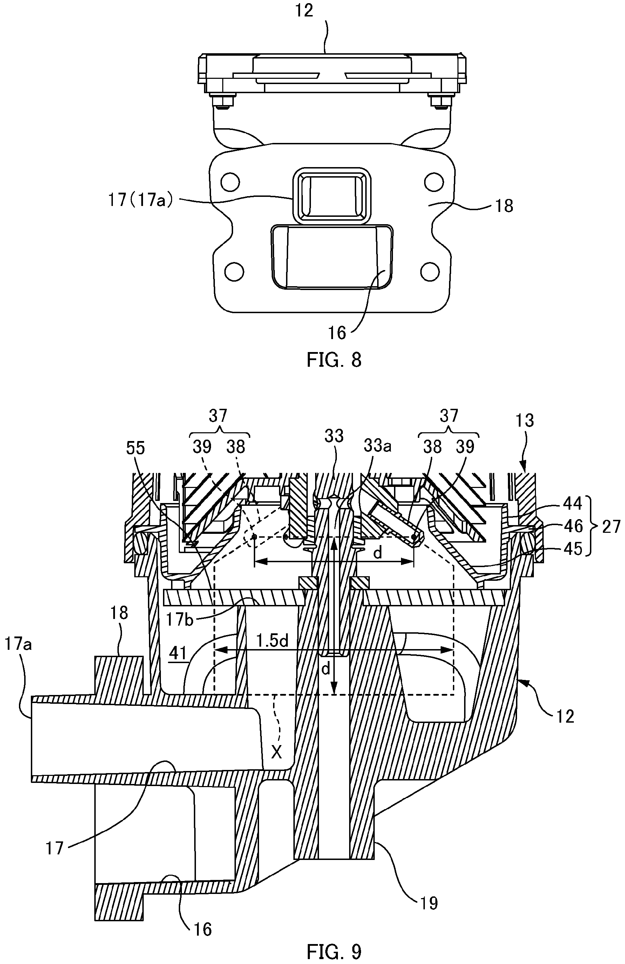

Here, the communication tube portion 16 and the tubular member 17 disposed in the lower case 12 will be described below in detail. As illustrated in Figs. 6 and 7, in the internal space of the lower case 12, the cylindrical joint 19 projecting upward is provided. A part of the tubular member 17 is disposed along the joint 19. This tubular member 17 is bent into an L shape in the middle, and the remaining part is disposed parallel to the communication tube portion 16. As also illustrated in Fig. 8, the tubular member 17 is disposed immediately above the communication tube portion 16, and an end portion of the tubular member 17 projects from the flange 18.

As illustrated in Fig. 9, an upper end portion of the joint 19 is fitted to a stationary frame 55. This stationary frame 55 is a metallic frame mounted to the fitted portion 14 in the lower case 12 (see Fig. 4) . An introduction-inlet-side part 17a of the tubular member 17 for introducing blow-by gas projects backward beyond the flange 18 (the right side in Fig. 9) . An introduction-outlet-side part 17b of the tubular member 17 is disposed near the joint 19 and immediately below the stationary frame 55.

The opening width of the introduction-outlet-side part 17b is sufficiently wider than the width of the frame constituting the stationary frame 55. In this embodiment, an opening area of the introduction-outlet-side part 17b matches an opening area of the outlet pipe 26 (see Fig. 2), and this makes flowing of the blow-by gas smooth. The blow-by gas discharged from the tubular member 17 flows upward through the stationary frame 55, and flows into the hollow part of the rotor 31 from an area closer to the rotational center with respect to the turning paths of the injection holes 39.

In order for the blow-by gas to efficiently flow into the hollow part of the rotor 31, the following configuration is needed: the opening of the introduction-outlet-side part 17b of the tubular member 17 (the gas introducing portion) is located in the proximity of the lower side of the nozzle 37; and more specifically, as indicated by a dotted line with reference symbol X in Fig. 9, the opening is located within a range extending from the injection hole 39 obliquely below by 45 degrees with respect to the axis of the spindle 32 and within a range extending downward from the height of the injection hole 39 by two-thirds of the rotation diameter d of the injection hole 39. This makes it possible to restrain an inclusion of oil injected from the injection holes 39, and simultaneously allows the blow-by gas discharged from the tubular member 17 to be introduced to the upper chamber 42 from an area closer to the rotational center with respect to the turning paths of the injection holes 39.

The oil which has been injected from the nozzles 37 (the injection holes 39) is collected, together with the oil which has been separated from the blow-by gas, to the bottom of the lower chamber 41. And then, the oil is returned to the engine 4 through the communication tube portion 16. In this embodiment, since the flow passage for blow-by gas is separated by the tubular member 17, the flow of oil is less likely to be affected by the flow of blow-by gas.

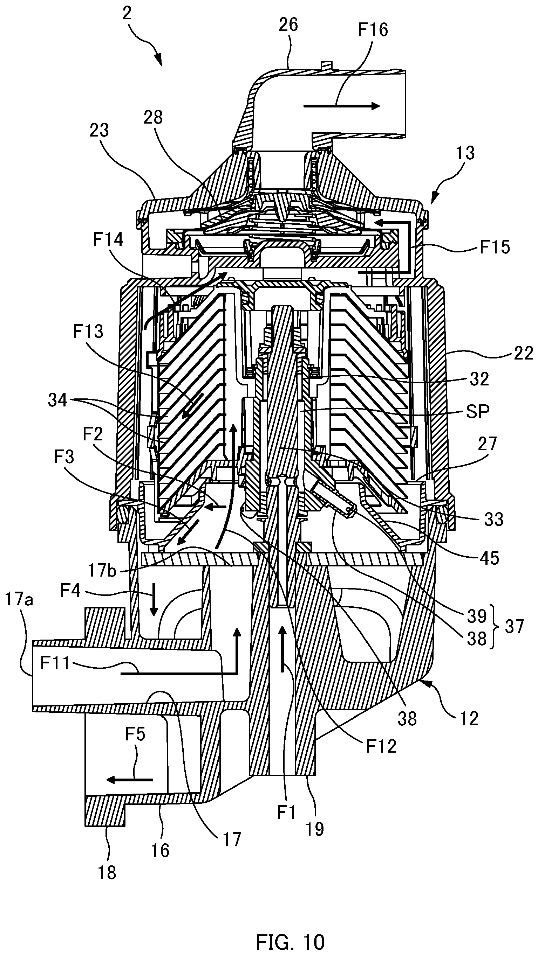

Here, the separation of the mist oil from the blow-by gas in the oil separator 2 having the foregoing configuration will be described with reference to Fig. 10.

As indicated by an arrow with reference symbol F1, the oil which has been supplied from the engine 4 to the joint 19 through the oil supply pipe 9 flows into the spindle shaft 33. Afterwards, the oil flows from the spindle shaft 33 to the nozzle bodies 38 and is injected from the injection holes 39 as indicated by an arrow with reference symbol F2. By the injection of the oil from each injection hole 39, the rotor 31 and the spindle 32 rotate around the spindle shaft 33.

The injected oil is sprayed to the tapered portion 45 of the partition member 27. And then, as indicated by an arrow with reference symbol F3, the oil is guided obliquely below toward the outer peripheral side along the inclined surface 45a of the tapered portion 45. This can restrain a mixture of oil spray to the blow-by gas. Afterwards, as indicated by an arrow with reference symbol F4, the oil flows down on the inner surface of the lower case 12 to the bottom of the lower chamber 41. And, as indicated by an arrow with reference symbol F5, the oil flows into the communication tube portion 16 and is returned to the crankcase from the side surface of the engine 4.

On the other hand, as indicated by an arrow with reference symbol F11, the blow-by gas from the engine 4 is guided by the tubular member 17. Afterwards, as indicated by an arrow with reference symbol F12, the blow-by gas which has been discharged from the introduction-outlet-side part 17b flows into the hollow part of the rotor 31 through an area inside the motion paths of the injection holes 39. Since the tubular member 17 forms the independent flow passage, the flow of oil is less likely to be affected by the flow of blow-by gas.

As indicated by an arrow with reference symbol F13, the blow-by gas flowing into the hollow part of the rotor 31 moves through the clearances between the separation disks 34 to the outer peripheral direction of the rotor 31 due to a centrifugal force which is generated by the rotation of the rotor 31. Thus, when the blow-by gas moves to the outer peripheral direction of the rotor 31 due to the centrifugal force, the pressure at the inner peripheral side of the rotor 31 becomes lower than the pressure at the outer peripheral side. Due to the pressure difference, the blow-by gas in the lower chamber 41 becomes more likely to flow into the hollow part at the rotor 31, and thereby the flow efficiency of the blow-by gas increases.

When the blow-by gas comes into contact with the separation disks 34, the mist oil contained in this blow-by gas attaches to the surfaces of the separation disks 34. The attached mist oil and additional mist oil coalesce, and thus the oil condenses on the surfaces of the separation disks 34. That is, the oil undergoes secondary separation. As described above, in the lower chamber 41, the mist oil is separated from the blow-by gas by primary separation. Accordingly, by the secondary separation at the separation disks 34, the mist oil is separated from the blow-by gas at a high level. Thus, the upper chamber 42 corresponds to the secondary separation chamber in which the secondary separation of the remaining mist oil is performed to separate the remaining mist oil from the blow-by gas which has undergone primary separation of the mist oil.

A clearance SP is formed between the spindle 32 and the spindle shaft 33. This clearance serves as an oil guiding passage and is filled with the oil which is supplied to be injected from the nozzles 37. Since the oil supply pressure is sufficiently high, some oil filling the clearance passes through the upper end of the clearance and is discharged from the upper end portion of the spindle 32 to the hollow part of the rotor 31. Similar to the blow-by gas, due to the centrifugal force of the rotor 31, the oil discharged to the hollow part of the rotor 31 moves through the clearances between the separation disks 34 to the outer peripheral direction of the rotor 31.

The oil condensed on the surfaces of the separation disks 34 coalesces with the oil discharged to the hollow part of the rotor 31. This cleans the surfaces of the separation disks 34, and therefore simplifies maintenance for the separation disks 34. The oil which has been condensed on the surfaces of the separation disks 34 and the oil which has coalesced are discharged from the outer peripheral edges of the separation disks 34. The oil collides with the inner surface of the body cover 22, and then flows down along this inner surface. And, the oil joins the oil injected from the nozzles 37 in the lower chamber 41 and is returned to the engine 4.

The blow-by gas, which has passed through the rotor 31 and from which the mist oil has been separated, moves upward with turning through the clearance between the inner surface of the upper case 13 and the rotor 31 in the upper chamber 42. It may be considered that the separated oil is carried upward by a turning flow of the blow-by gas. However, the longitudinal ribs 24 (see Fig. 4), which are disposed at the inner surface of the body cover 22, block the movement of the oil, and the oil coalesces and flows down along the longitudinal ribs 24. Even if the oil flows from the outer peripheral side to the inner peripheral side along the inner surface of the body cover 22, the cylindrical rib 54 can make the oil into droplets and drop the oil.

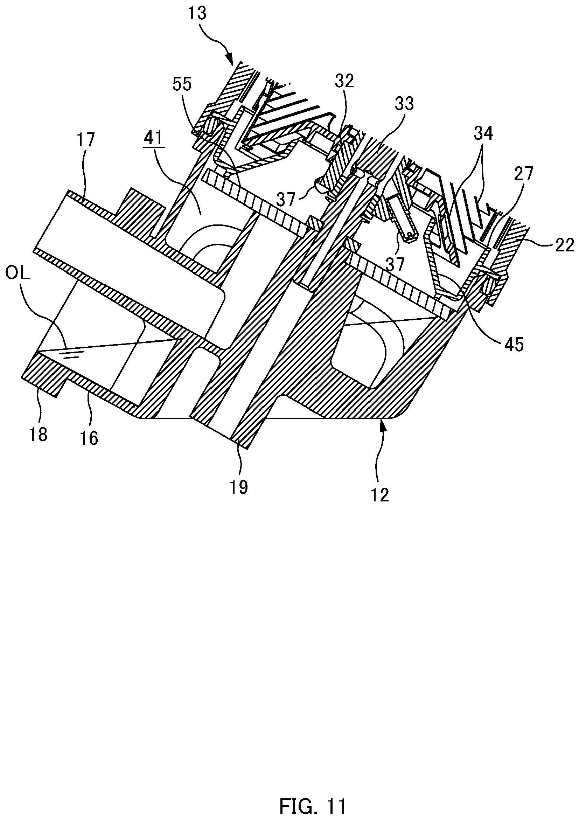

Thus, the blow-by gas from which the mist oil has been separated is introduced to the space on the top surface side of the PCV valve 28, as indicated by arrows with reference symbols F14 and F15. Then, as indicated by an arrow with reference symbol F16, the blow-by gas passes through the outlet pipe 26 and is introduced to the breather pipe 3. In the oil separator 2 of this embodiment, the independent flow passage for blow-by gas is formed by the tubular member 17. Therefore, for example, if the oil separator 2 inclines forward as illustrated in Fig. 11, oil OL accumulated in the lower chamber 41 does not wave by the flow of the blow-by gas. This can prevent the oil from entering the rotor 31 side, and can maintain a high cleaning performance for gas.

In the oil separator 2 of this embodiment, the separation disks 34 are the ring-shaped plates which are inclined downward toward the outer peripheral side. Accordingly, the oil separated at the separation disks 34 flows downward, and this can restrain the mixture of oil to the processed gas. Additionally, as illustrated in Fig. 9 and the like, a part of the tubular member 17 (the gas incoming portion) on the side on which the gas flows in is disposed parallel to the communication tube portion 16 (the oil discharge portion) . This makes it possible to downsize the device.

The description of the above-described embodiment is for ease of understanding of the present invention and does not limit the present invention. The present invention may be modified or improved without departing from the gist and includes the equivalents. For example, the present invention may be configured as follows.

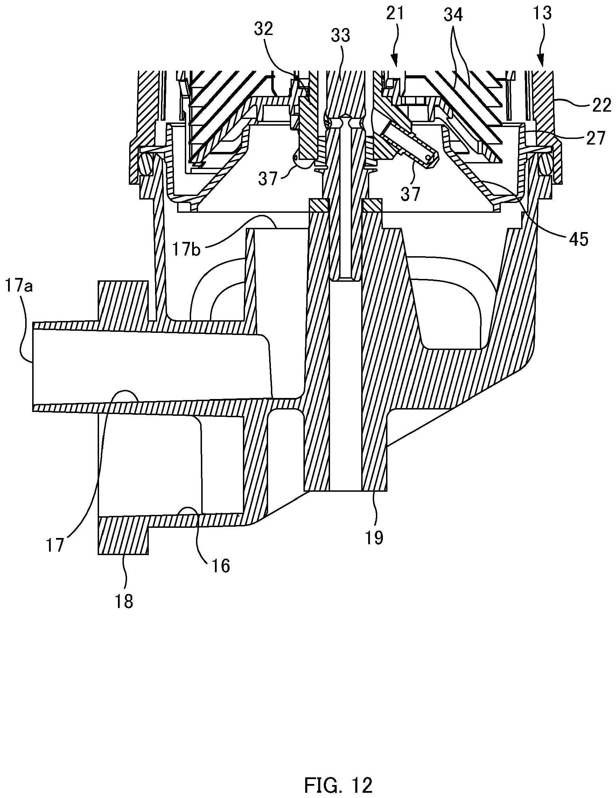

In the above-described embodiment, the stationary frame 55 supports the upper end portion of the joint 19, and also supports the lower end portion of the spindle shaft 33. In this point, for example, the stationary frame 55 may be omitted as illustrated in Fig. 12. This is because, since a part of the tubular member 17 (the gas incoming portion) on the discharge side is integrated with the joint 19, a rigidity of the joint 19 is improved.

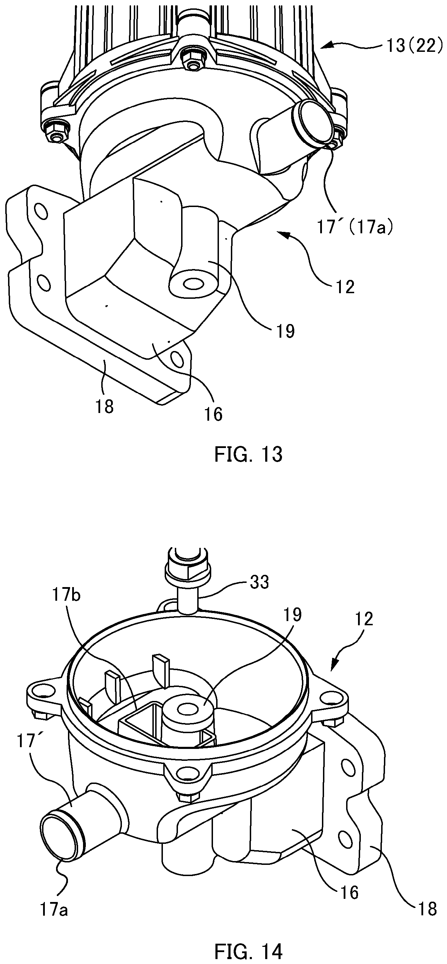

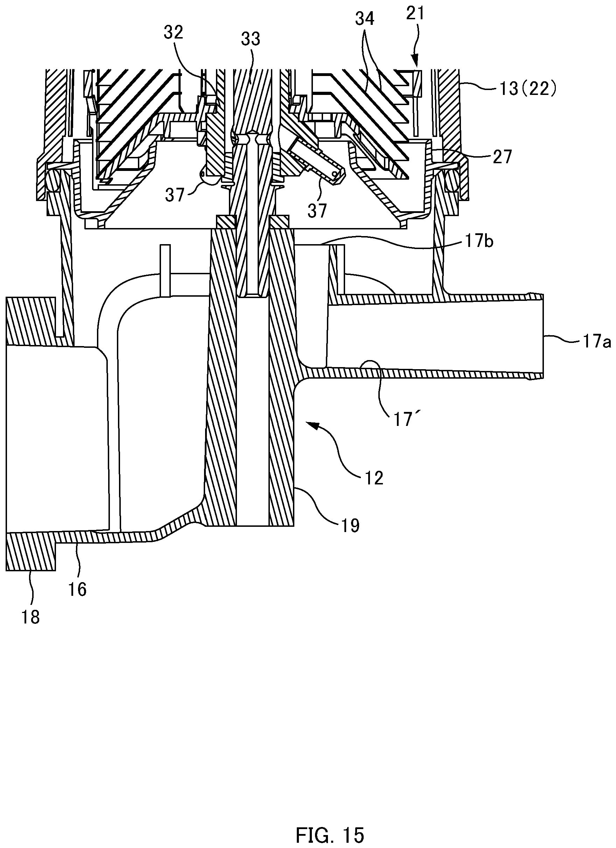

As illustrated in Figs. 13 to 15, the introduction-inlet-side part 17a of a tubular member 17' (the gas incoming portion) may be disposed at a position different from the communication tube portion 16 (the oil discharge portion) in the lower case 12; for example, the introduction-inlet-side part 17a may project forward from the front surface of the lower case 12. With such a configuration, it is possible to easily apply the invention to a vehicle type that guides the blow-by gas with a hose or the like. The projection position of the introduction-inlet-side part 17a is not limited to the front surface of the lower case 12, and may be any one of right and left side surfaces.

### REFERENCE SIGNS LIST

1 closed crankcase ventilation system, 2 oil separator
3 breather pipe, 4 engine, 5 intake-side flow passage
6 air filter, 7 turbocharger, 8 charge cooler
9 oil supply pipe, 11 housing, 12 lower case, 13 upper case
14 fitted portion in lower case
15 lower end portion in upper case
16 communication tube portion, 17, 17' tubular member
17a introduction-inlet-side part of tubular member
17b introduction-outlet-side part of tubular member
18 flange, 19 joint, 21 rotor unit, 22 body cover
23 disk-shaped top surface cover, 24 longitudinal rib
25 gas discharge portion, 26 outlet pipe, 27 partition member
28 PCV valve, 31 rotor, 32 spindle, 33 spindle shaft
33a oil supply passage, 34 separation disk
35 upper holder, 36 lower holder, 36a coupling arm
37 nozzle, 38 nozzle body, 39 injection hole
41 lower chamber, 42 upper chamber
43 communication port
44 outer peripheral portion of partition member
45 tapered portion of partition member
45a inclined surface of tapered portion
46 collar portion of partition member
47 diaphragm of PCV valve, 48 upper spring of PCV valve
49 lower spring of PCV valve
51 pedestal portion, 52 air communicating portion
53 communicating window, 54 cylindrical rib
55 stationary frame
AL axial direction of spindle, NL axial direction of nozzle body
SP clearance between spindle and spindle shaft
OL oil accumulated in lower chamber

## Claims

1. An oil separator (2) for separating mist oil contained in target gas, the oil separator comprising:
a plurality of separation disks (34) that are rotatable together with a spindle (32) and that are laminated in an axial direction of (AL) the spindle;
a nozzle (37) that is projected from a part of a peripheral surface of the spindle, the part being located below the separation disks, and that injects oil from an injection hole (39) to rotate the spindle around an axis;
a lower case (12) that includes a gas introducing portion and an oil discharge portion, the gas introducing portion being configured to introduce the target gas, the oil discharge portion being configured to discharge oil;
an upper case (13) that is mounted to the lower case from above, the upper case and the lower case separating a chamber, the chamber housing the spindle, the separation disks, and the nozzle; and
a partition member (27) that partitions the chamber into a lower chamber (41) and an upper chamber (42), and that forms a communication port (432) around the spindle at a height between the nozzle and the separation disks, the communication port guiding the target gas that is in the lower chamber to the upper chamber,
wherein the gas introducing portion is composed of a tubular member (17; 17') which is provided separately from the oil discharge portion, the tubular member including an introduction-inlet end portion and an introduction-outlet end portion,
the introduction-inlet end portion being for the target gas and being located outside of the lower case, the introduction-outlet end portion being for the target gas and being located in a proximity of a lower side of the nozzle.

2. The oil separator according to claim 1, wherein
the spindle is rotatably supported by a spindle shaft (33),
the lower case includes a joint (19) to which a lower end portion of the spindle shaft is fitted, and
the gas introducing portion has an introduction-outlet-side part (17b) extending along the joint.

3. The oil separator according to claim 2, wherein
the spindle shaft is composed of a cylindrical member that supplies oil, the oil serving as a power source for the spindle, and wherein
the joint is composed of a tubular member that supplies the oil to the spindle shaft.

4. An oil separator according to claim 1,
wherein the introduction-outlet end portion for the target gas is located within a height range extending downward from a height of the injection hole by a rotation diameter d of the injection hole and within a diameter range 1.5 times of the rotation diameter d.

5. The oil separator according to any one of claims 1 to 4, wherein
the partition member is a ring-shaped plate which inclines downward toward an outer peripheral side, and the oil which has been injected from the injection hole is sprayed to a downward inclined surface of the partition member.

6. The oil separator according to any one of claims 1 to 5, wherein
the gas introducing portion has an introduction-inlet-side part (17a) which is disposed parallel to the oil discharge portion.

7. The oil separator according to claim 1,
wherein the introduction-inlet-side part of the gas introducing portion projects outwardly beyond the lower case at a position different from the oil discharge portion in the lower case.

## Patentansprüche

1. Ölabscheider (2) zum Abscheiden von Nebelöl, das in einem Zielgas enthalten ist, wobei der Ölabscheider Folgendes umfasst:
mehrere Trennscheiben (34), die zusammen mit einer Spindel (32) drehbar sind und die in einer axialen Richtung (AL) der Spindel geschichtet sind,
eine Düse (37), die von einem Teil einer Umfangsfläche der Spindel aus vorspringt, wobei der Teil unterhalb der Trennscheiben angeordnet ist, und die Öl aus einem Einspritzloch (39) einspritzt, um die Spindel um eine Achse zu drehen,
ein unteres Gehäuse (12), das einen Gaseinleitungsabschnitt und einen Ölablassabschnitt einschließt, wobei der Gaseinleitungsabschnitt dafür konfiguriert ist, das Zielgas einzuleiten, wobei der Ölablassabschnitt dafür konfiguriert ist, Öl abzulassen,
ein oberes Gehäuse (13), das von oben an dem unteren Gehäuse angebracht ist, wobei das obere Gehäuse und das untere Gehäuse eine Kammer trennen, wobei die Kammer die Spindel, die Trennscheiben und die Düse aufnimmt, und
ein Teilungselement (27), das die Kammer in eine untere Kammer (41) und eine obere Kammer (42) teilt und das bei einer Höhe zwischen der Düse und den Trennscheiben eine Verbindungsöffnung (432) um die Spindel bildet, wobei die Verbindungsöffnung das Zielgas, das sich in der unteren Kammer befindet, zu der oberen Kammer leitet,
wobei der Gaseinleitungsabschnitt aus einem röhrenförmigen Element (17; 17') besteht, das gesondert von dem Ölablassabschnitt bereitgestellt wird, wobei das röhrenförmige Element einen Einleitungseinlass-Endabschnitt und einen Einleitungsauslass-Endabschnitt einschließt,
wobei der Einleitungseinlass-Endabschnitt für das Zielgas ist und außerhalb des unteren Gehäuses angeordnet ist, wobei der Einleitungsauslass-Endabschnitt für das Zielgas ist und in der Nähe einer unteren Seite der Düse angeordnet ist.

2. Ölabscheider nach Anspruch 1, wobei
die Spindel drehbar durch eine Spindelwelle (33) getragen wird,
das untere Gehäuse ein Verbindungsstück (19) einschließt, an dem ein unterer Endabschnitt der Spindelwelle angebracht ist, und
der Gaseinleitungsabschnitt einen Einleitungsauslass-Seitenteil (17b) aufweist, der sich entlang des Verbindungsstücks erstreckt.

3. Ölabscheider nach Anspruch 2, wobei
die Spindelwelle aus einem zylindrischen Element besteht, das Öl zuführt, wobei das Öl als eine Antriebsquelle für die Spindel dient, und wobei
das Verbindungsstück aus einem röhrenförmigen Element besteht, welches das Öl der Spindelwelle zuführt.

4. Ölabscheider nach Anspruch 1,
wobei der Einleitungsauslass-Endabschnitt für das Zielgas innerhalb eines Höhenbereichs angeordnet ist, der sich von einer Höhe des Einspritzlochs aus um einen Rotationsdurchmesser d des Einspritzlochs und innerhalb eines Durchmesserbereichs des 1,5-Fachen des Rotationsdurchmessers d nach unten erstreckt.

5. Ölabscheider nach einem der Ansprüche 1 bis 4, wobei
das Teilungselement eine ringförmige Platte ist, die sich zu einer äußeren Umfangsseite hin nach unten neigt, und das Öl, das aus dem Einspritzloch eingespritzt wird, zu einer nach unten geneigten Fläche des Teilungselements gesprüht wird.

6. Ölabscheider nach einem der Ansprüche 1 bis 5, wobei
der Gaseinleitungsabschnitt einen Einleitungseinlass-Seitenteil (17a) aufweist, der parallel zu dem Ölablassabschnitt angeordnet ist.

7. Ölabscheider nach Anspruch 1,
wobei der Einleitungseinlass-Seitenteil des Gaseinleitungsabschnitts an einer Position, die sich von dem Ölablassabschnitt in dem unteren Gehäuse unterscheidet, über das untere Gehäuse hinaus nach außen vorspringt.

## Revendications

1. Séparateur d'huile (2) pour séparer le brouillard d'huile contenu dans un gaz cible, le séparateur d'huile comprenant :
plusieurs disques de séparation (34) pouvant tourner ensemble avec une broche (52) et stratifiés dans une direction axiale (AL) de la broche ;
une buse (37) s'étendant à partir d'une partie d'une surface périphérique de la broche, la partie étant située au-dessous des disques de séparation, et injectant de l'huile à partir d'un trou d'injection (39) pour faire tourner la broche autour d'un axe ;
un carter inférieur (12) incluant une partie d'introduction du gaz et une partie de décharge de l'huile, la partie d'introduction du gaz étant configurée pour introduire le gaz cible, la partie de décharge de l'huile étant configurée pour décharger l'huile ;
un carter supérieur (13) monté sur le carter inférieur d'en haut, le carter supérieur et le carter inférieur séparant une chambre, la chambre recevant la broche, les disques de séparation et la buse ; et
un élément de séparation (27) séparant la chambre en une chambre inférieure (41) et une chambre supérieure (42), et formant un orifice de communication (432) autour de la broche au niveau d'une hauteur entre la buse et les disques de séparation, l'orifice de communication guidant le gaz cible contenu dans la chambre inférieure vers la chambre supérieure ;
dans lequel la partie d'introduction du gaz est composée d'un élément tubulaire (17 ; 17') agencé séparément de la partie de décharge de l'huile, l'élément tubulaire incluant une partie d'extrémité d'entrée d'introduction et une partie d'extrémité de sortie d'introduction ;
la partie d'extrémité d'entrée d'introduction étant prévue pour le gaz cible et étant agencée à l'extérieur du carter inférieur, la partie d'extrémité de sortie d'introduction étant prévue pour le gaz cible et étant agencée à proximité d'un côté inférieur de la buse.

2. Séparateur d'huile selon la revendication 1, dans lequel :
la broche est supportée de manière rotative par un arbre de la broche (33) ;
le carter inférieur inclut un joint (19) sur lequel est ajustée une partie d'extrémité inférieure de l'arbre de la broche ; et
la partie d'introduction du gaz comporte une partie du côté de sortie d'introduction (17b) s'étendant le long du joint.

3. Séparateur d'huile selon la revendication 2, dans lequel :
l'arbre de la broche est composé d'un élément cylindrique assurant l'alimentation d'huile, l'huile servant de source d'alimentation de la broche ; et dans lequel :
le joint est composé d'un élément tubulaire fournissant l'huile à l'arbre de la broche.

4. Séparateur d'huile selon la revendication 1,
dans lequel la partie d'extrémité de sortie d'introduction pour le gaz cible est située dans une plage de hauteurs s'étendant vers le bas à partir d'une hauteur du trou d'injection, d'un diamètre de rotation d du trou d'injection, et dans une plage de diamètres représentant 1,5 fois le diamètre de rotation d.

5. Séparateur d'huile selon l'une quelconque des revendications 1 à 4, dans lequel :
l'élément de séparation est constitué par une plaque de forme annulaire inclinée vers le bas en direction d'un côté périphérique externe, l'huile ayant été injectée à partir du trou d'injection étant pulvérisée vers une surface inclinée vers le bas de l'élément de séparation.

6. Séparateur d'huile selon l'une quelconque des revendications 1 à 5, dans lequel :
la partie d'introduction du gaz comporte une partie du côté d'entrée d'introduction (17a) disposée parallèlement à la partie de décharge.

7. Séparateur d'huile selon la revendication 1,
dans lequel la partie du côté d'entrée d'introduction de la partie d'introduction du gaz s'étend vers l'extérieur au-delà du carter inférieur au niveau d'une position différente de la partie de décharge d'huile dans le carter inférieur.
